# EUROPÄISCHE PATENTSCHRIFT

(11) **EP 0 896 759 B1**
(45) Veröffentlichungstag und Bekanntmachung des Hinweises auf die Patenterteilung: **31.10.2001**
(21) Anmeldenummer: 97908175.9
(22) Anmeldetag: 05.03.1997
(51) Int. Cl.: H02K 9/14, H02K 5/20, F04D 29/66, A47L 5/22

(54) **SCHNELLAUFENDER ELEKTROMOTOR**
HIGH-SPEED ELECTRIC MOTOR
MOTEUR ELECTRIQUE RAPIDE

(30) Priorität: 30.04.1996 DE 19617265
(43) Veröffentlichungstag der Anmeldung: 17.02.1999
(73) Patentinhaber: Vorwerk & Co. Interholding GmbH, 42275 Wuppertal (DE)
(72) Erfinder: VARNHORST, Mathias, D-42349 Wuppertal (DE); ULLRICH, Gerhard, D-44287 Dortmund (DE); ARNOLD, Hans-Peter, D-42489 Wülfrath (DE); MÜLLER, Manuela, D-58332 Schwelm (DE)
(74) Vertreter: Müller, Enno, Dipl.-Ing.
(86) Internationale Anmeldenummer: EP9701092
(87) Internationale Veröffentlichungsnummer: WO9741631

(56) Entgegenhaltungen:
- GB-A- 2 117 982
- US-A- 1 601 531
- US-A- 1 883 288
- US-A- 4 111 615
- US-A- 5 391 064

## Beschreibung

Die Erfindung betrifft einen schnellaufenden Elektromotor, bspw. für Haushaltsgeräte, insbesondere für einen Staubsauger, mit einem eine Motorwelle aufweisenden Rotor und einem Stator, mit einem Lageraufnahmeteil, in welchem die Motorwelle gelagert ist, wobei an der Motorwelle ein Ventilator angeflanscht ist zur Kühlung des Motors und bspw. bei einem Staubsauger zur Erbringung der Saugleistung, wobei weiter der Rotor und der Stator in einem Motorgehäuse aufgenommen sind und die Kühlluft zumindest teilweise außerhalb des Motorgehäuses entlangströmt und wobei der außerhalb des Motorgehäuses entlangströmenden Kühlluft ein schraubenlinienförmiger Verlauf aufgeprägt ist.

Derartige schnellaufende Elektromotoren sind bekannt und finden bspw. in Staubsaugern ihren Einsatz. Hier wird die Kühlluft zumindest teilweise außerhalb des Motorgehäuses entlanggeführt in der Form, daß die Luft scharf umgelenkt durch ein Labyrinth geschickt wird.
Die Wände des Labyrinths weisen eine schallabsorbierende Wirkung auf. Es erweist sich hierbei als nachteilig, daß aus dieser scharfen Luftumlenkung Strömungsverluste resultieren, die sich auf den Gesamtwirkungsgrad des Gerätes nachteilig auswirken. Ein Elektromotor der in Rede stehenden Art ist aus der US-A 4,111,615 bekannt, bei welchem an der Motorwelle zur Kühlung des Motors ein Ventilator angeflanscht ist und die Kühlluft zumindest teilweise außerhalb des Motorgehäuses entlang strömt, wobei der Kühlluft ein schraubenförmiger Verlauf aufgeprägt ist, dies bei Ausbildung eines Strömungsleitelementes über einen Teilumfang des Motorgehäuses. Weiter sind aus der US-A 1,883,288 und der GB-A 2 117 982 Elektromotoren bekannt, welche durch Luftumströmung des Motorgehäuses gekühlt werden.

Im Hinblick auf den vorbeschriebenen Stand der Technik wird eine technische Problematik der Erfindung dahingehend gesehen, einen schnellaufenden, zumindest teilweise außerhalb des Motorgehäuses von Kühlluft zu umströmenden Elektromotor anzugeben, welcher sich durch eine strömungstechnisch verbesserte Umlenkung der Kühlluft um das Motorgehäuse auszeichnet.

Diese Problematik ist zunächst und im wesentlichen beim Gegenstand des Anspruchs 1 gelöst, wobei darauf abgestellt ist, daß die Kühlluft durch das Lageraufnahmeteil im Bereich von dort angeordneten Durchbrüchen tritt und in Richtung auf die Außenwandung des Motorgehäuses geführt ist, und daß ein außenseitig des Motorgehäuses angeordnetes Strömungsleitelement über mehr als einen halben Umfang des Motorgehäuses ausgebildet ist. Findet bspw. der erfindungsgemäße schnellaufende Elektromotor seinen Einsatz als Gebläsemotor in einem Staubsauger, so kann die aus dem Gebläseteil austretende Luft in strömungstechnisch verbesserter Weise um das Motorgehäuse zur Kühlung des Elektromotors geführt werden. Hierzu wird der Kühlluft ein schraubenlinienförmiger Verlauf aufgeprägt, welcher Verlauf eine weiche Umlenkung des Kühlluftstromes bewirkt. Es entstehen hierbei keine, zumindest keine wesentlichen Strömungsverluste, bspw. durch Wirbelbildung, so daß die Umströmung des Elektromotors zur Kühlung desselben sich demnach nicht auf den Gesamtwirkungsgrad des Gerätes nachteilig auswirkt. So hat sich überraschenderweise durch diese erfindungsgemäße Ausgestaltung ergeben, daß bei einem Elektromotor, welcher mit einer Drehzahl von 33.000 Umdrehungen pro Minute arbeitet, sich bei gleicher Leistung zu herkömmlichen, gleich schnell laufenden Elektromotoren eine etwa um 50 % reduzierte Leistungsaufnahme ergibt. Zur Aufprägung des schraubenlinienförmigen Verlaufes der Kühlluft ist vorgesehen, daß das Motorgehäuse außenseitig Strömungsleitelemente für die Kühlluft aufweist. Diese Strömungsleitelemente sind entsprechend schraubenlinienförmig um das Motorgehäuse angeordnet. Bspw. können hierzu sich senkrecht zur Ausrichtung des Motorgehäuses bzw. senkrecht zur Motorwelle erstreckende Leitelemente in Form von ringartigen Kragen ausgebildet sein, welche sich schraubenlinienförmig um das Motorgehäuse erstrecken. In einer bevorzugten Ausgestaltung ist vorgesehen, daß die Strömungsleitelemente in einem gesonderten Leitelementgehäuse angeordnet sind. Letzteres wird um das Motorgehäuse plaziert. Bspw. kann hierzu ein aus Kunststoff hergestelltes Leitelementgehäuse vorgesehen sein, an welchem die Strömungsleitelemente direkt angespritzt sind, bzw. wobei die Strömungsleitelemente in einem Arbeitsgang mit dem Leitelementgehäuse hergestellt werden. Weiterhin wird vorgeschlagen, daß das Leitelementgehäuse gitterartig ausgebildet ist. Weiter wird in Vorschlag gebracht, daß die Strömungsleitelemente in dem Leitelementgehäuse innenseitig bezüglich der gitterartigen Struktur hervorragen. Wie bereits erwähnt, wird bevorzugt, das Leitelementgehäuse mitsamt den Strömungsleitelementen aus einem Kunststoff herzustellen, dies bspw. im Spritzverfahren. Das Leitelementgehäuse kann weiter bspw. in Form von zwei Kapselhälften in einem Produktionsvorgang hergestellt werden, wobei bspw. Filmscharniere diese beiden Kapselhälften miteinander verbinden. Bei einem Zusammenbau der gesamten Motoreinheit wird dieses im Prinzip zweiteilige, aufgeklappte Leitelementgehäuse über das Motorgehäuse gestülpt, wobei im Zuge dessen die beiden Kapselhälften derart um das Filmscharnier geklappt werden, daß ein geschlossenes, das Motorgehäuse vollständig umschließendes Leitelementgehäuse gebildet ist. In dieser Stellung können bspw. bekannte Clipsverbindungen die Kapselhälften zueinander arretieren. Die in jeder Kapselhälfte innenseitig angeordneten Strömungsleitelemente sind so angeordnet, daß nach einem Zusammenklappen zur Bildung des gewünschten Leitelementgehäuses diese Strömungsleitelemente insgesamt einen schraubenlinienförmigen Verlauf aufweisen. Bedingt durch die gitterartige Struktur des Leitelementgehäuses ist dieses in vorteilhafter Weise gewichtsreduziert. Um eine schallabsorbierende Wirkung im Bereich des Leitelementgehäuses zu erzielen, wird vorgeschlagen, daß letzteres außenseitig von einem Schallschutzmaterial umgeben ist. Der durch das Leitelementgehäuse tretende Schall wird durch das dieses Gehäuse umgebende Schallschutzmaterial absorbiert. Erfindungsgemäß ist hierzu vorgesehen, daß das Schallschutzmaterial ein offenzelliger Schaumstoff ist. Bspw. kann hier Polyurethan zum Einsatz kommen. Als besonders vorteilhaft erweist es sich, daß die Strömungsleitelemente nach Art einer zweigängigen Schraubenlinie ausgebildet sind. Zudem wird vorgeschlagen, daß die Strömungsleitelemente im wesentlichen boden- und deckenartig einen Luftströmungsweg begrenzen. Durch diese Maßnahmen ist ein zweiwendeliger, spiralförmiger Strömungskanal um das Motorgehäuse gebildet, welcher an der Lufteinströmseite beginnend bis an das obere Ende des Motorgehäuses reicht. Da sich der Verlauf dieses Strömungskanals an der austretenden Luft orientiert, kann dieser ohne nennenswerte Strömungsverluste passiert werden. Der mit der Luft bspw. aus einem Gebläse austretende Schall wird von den Wendel-bzw. Strömungsleitelementböden/-decken derart reflektiert, daß er seitlich aus dem gitterartigen Leitelementgehäuse austritt. Die über die gesamte Außenfläche des Kunststoffkorbes gespannte Schaumstofffläche absorbiert hierbei wirkungsvoll den austretenden Schall. Die Strömungsleitelemente sind hierzu dermaßen bemessen und ausgerichtet, daß sich diese von der Innenseite des Leitelementgehäuses bis an die Außenfläche des Motorgehäuses erstrecken, so daß der gebildete Strömungskanal im wesentlichen lediglich in Richtung auf die Schaumstofffläche hin geöffnet ist. Es wird weiter bevorzugt, daß die Kühlluft einer in Richtung auf die Ausblasrichtung erweiternden Spirale folgt. Ebenfalls wird auch der Schall entsprechend spiralförmig abgelenkt, womit der Schall desweiteren immer wieder zwischen dem Motorgehäuse und dem Schallschutzmaterial hin- und her abgelenkt wird, was zu einer optimierten schallabsorbierenden Wirkung führt. In einer Ausführungsform des Erfindungsgegenstandes ist vorgesehen, daß ein Strömungsleitelement über mehr als einen halben Umfang des Motorgehäuses ausgebildet ist. Dies hat bei einer zweiwendelig ausgebildeten Spiralausformung der Strömungsleitelemente, bei welcher, wie bevorzugt, die Strömungsleitelemente um 180° zueinander versetzt verlaufen, zur Folge, daß sich Teilabschnitte eines jeden, einem Wendel zugehörigen Strömungsleitelementes in einer Projektion überlappen. Erfindungsgemäß ist weiter vorgesehen, daß ein Strömungsleitelement einen Umschlingungswinkel von 200° bis 300° aufweist. Hierdurch wird eine freie Durchstrahlung des Geräusches, ausgehend von der Gebläseausblasöffnung zur Motorgehäuseausblasöffnung vermieden. Auch bei einer Ausgestaltung, bei welcher das Motorgehäuse einen konisch verlaufenden Bereich aufweist, werden die spiralförmigen Strömungsleitelemente auch in diesem Bereich eng an dem Motorgehäuse entlanggeführt, wobei die Breite jedes Leitelementes deutlich in Richtung auf den konisch verlaufenden Bereich vergrößert wird. In einer bevorzugten Ausgestaltung erstreckt sich dieser Überlappungsbereich über einen Winkel von ca. 60 bis 70°. Weiter ist vorgesehen, daß das Leitelementgehäuse gegebenenfalls einschließlich des Schallschluckmaterials von einem Motoraußengehäuse umgeben ist. Bei einem Zusammenstellen der gesamten Motoreinheit wird dem Motorgehäuse das Leitelementgehäuse übergestülpt und hiernach letzteres mit dem Schallschluckmaterial in Form von bspw. einer offenzelligen Schaumstoffmatte oder dergleichen umgeben, wobei hier eine Fixierung des Schallschluckmaterials dadurch gegeben sein kann, daß das Leitelementgehäuse außenseitig zahnartige Vorsprünge aufweist, welche in das Schallschluckmaterial eingreifen. Die so gebildete Einheit wird hiernach in ein Motoraußengehäuse eingeschoben. Es wird vorgeschlagen, daß das Motoraußengehäuse ausströmseitig ein siebartiges, sich im wesentlichen quer zur Motorachse erstreckendes Ausblasteil aufweist. Die einströmseitig in das Motoraußengehäuse eintretende Luft wird über die erwähnten Strömungsleitelemente schraubenlinienförmig um das Motorgehäuse zur Kühlung desselben geführt und nach Austritt aus dem Leitelementgehäuse durch das siebartige Ausblasteil des Motoraußengehäuses in die Umgebung abgeführt. Weiter wird bei einem erfindungsgemäßen schnellaufenden Elektromotor, wobei das Motoraußengehäuse ventilatorseitig ein Lageraufnahmeteil aufweist und das Lageraufnahmeteil mindestens ein, Durchbrüche belassendes Brückenteil aufweist, vorgeschlagen, daß das Lageraufnahmeteil durchbruchseitig eine leitschaufelartige Ausformung aufweist. Solche Lageraufnahmeteile sind aus dem Stand der Technik bekannt. Diese sind in bekannter Weise zur Erbringung einer gewünschten Stabilität als ringförmiger, einen Mittelträger aufweisender Metallstabilisator ausgeformt. Dieses Lageraufnahmeteil bzw. Stabilisator muß relativ stabil und groß sein, damit der anzuordnende Motor nicht schwingt. Bei den bekannten Ausbildungen erweist sich jedoch der als Brückenteil ausgebildete Mittelträger hinsichtlich der Abströmung der Kühlluft als nachteilig, da hier bspw. starke Wirbel entstehen können. Die hieraus resultierenden Strömungsverluste sind nicht gewünscht. Erfindungsgemäß wird an dem Brückenteil durchbruchseitig eine leitschaufelartige Ausformung vorgesehen, welche bevorzugt einstückig mit dem Brückenteil ausgebildet sind. Strömungsrichtungsgebende Elemente sind üblicherweise aus Kunststoff geformt. Hier ist es jedoch erfindungsgemäß so, daß die leitschaufelartig Ausformung entsprechend dem Brückenteil aus einem Metall besteht. Die Ausbildung des Lageraufnahmeteiles ist weiterhin so gewählt, daß der Durchbruch einen Außenbereich aufweist, der in einer Projektion teilweise außerhalb des Motorgehäuses ausgebildet ist. Die durch den bzw. die Durchbrüche durchtretende Luft kann somit in den Bereich der Motorgehäuseaußenwandung gelangen und hier bei Anordnung des zuvor beschriebenen Leitelementgehäuses durch den zweiwendelig, spiralförmig gebildeten Strömungskanal geführt werden. Als besonders vorteilhaft erweist es sich, daß die Breite des Strömungsleitelementes etwa dem 0,3 bis 1fachen, vorzugsweise dem 0,5 bis 0,7fachen der radialen Breite des in einer Projektion außerhalb des Motorgehäuses ausgebildeten Teilbereiches des Außenbereiches entspricht. Weiter wird hierbei bevorzugt, das Motorgehäuse unterseitig, d. h. lufteinströmseitig des gesamten Motorkomplexes, geschlossen auszubilden. Wird das Motorgehäuse mitsamt dem Leitelementgehäuse in ein Motoraußengehäuse eingelegt, so ist die durch die Durchbrüche des Lageraufnahmeteiles durchtretende Luft gezwungen, das Motorgehäuse zur Kühlung desselben zu umströmen. Zur Optimierung dieser Kühlung wird vorgeschlagen, daß die leitschaufelartige Ausformung den Luftstrom zumindest teilweise in den Außenbereich ablenkt. Hier geschieht demnach eine Vororientierung der Kühlluft in Richtung auf den spiralförmigen Strömungskanal. Hierzu wird weiter vorgeschlagen, daß die leitschaufelartige Ausformung im wesentlichen eine Fortsetzung des Strömungsleitelementes darstellt. Der Luftstrom wird über die leitschaufelartigen Ausformungen in Richtung auf die Strömungsleitelemente, bevorzugt gegen deren Unterseite umgelenkt, von wo aus sie dann schraubenlinienförmig um das Motorgehäuse geführt wird. Es wird bevorzugt, daß die leitschaufelartige Ausformung eine dem Außenbereich zugeordnete, rinnenartige Vertiefung aufweist. Weiter wird hierzu vorgeschlagen, daß die rinnenartige Vertiefung etwa mittig zu dem Strömungsleitelement angeordnet ist. Dies zur sicheren Umlenkung des Luftstromes aus dem Bereich der Durchbrüche der Lageraufnahme in den zwischen dem Motorgehäuse und dem Leitelementgehäuse gebildeten, zweiwendlig, spiralförmig ausgebildeten Strömungskanal. Schließlich erweist es sich als vorteilhaft, daß die leitschaufelartige Ausformung punktsymmetrisch zur Motorwelle an zwei gegenüberliegenden Randbereichen des Brückenteiles ausgebildet sind. Diese Ausgestaltung wird insbesondere dann bevorzugt, wenn die Strömungsleitelemente nach Art einer zweigängigen Schraubenlinie ausgebildet sind, wobei jedem Strömungsleitelement eine leitschaufelartige Ausformung des Lageraufnahmeteiles zugeordnet ist derart, daß die leitschaufelartigen Ausformungen im wesentlichen jeweils Verlängerungen der Strömungsleitelemente ausbilden.

Nachstehend ist die Erfindung des weiteren anhand der beigefügten Zeichnung, die jedoch lediglich mehrere Ausführungsbeispiele darstellt, erläutert. Hierbei zeigt:
- Fig. 1: einen Handstaubsauger in perspektivischer Darstellung mit einer schematisch angedeuteten Motor-Gebläse-Einheit;
- Fig. 2: eine perspektivische Explosionsdarstellung, ein Motoraußengehäuse, eine ringförmige Schaumstofffläche, ein Leitelementgehäuse und die Motor-Gebläse-Einheit zeigend, wobei das Leitelementgehäuse eine erste Ausführungsform betrifft;
- Fig. 3: eine perspektivische Darstellung eines von einem Motorgehäuse umgebenen Elektromotors, wobei das Motorgehäuse von einem eine zweite Ausführungsform betreffenden Leitelementgehäuse umfaßt ist;
- Fig. 4: eine perspektivische Einzeldarstellung des Lageraufnahmeteiles;
- Fig. 5: eine Draufsicht auf Motorgehäuse und Leitelementgehäuse gemäß Fig. 3, wobei jedoch hier weiter das Leitelementgehäuse von der ringförmigen Schaumstofffläche umspannt ist;
- Fig. 6: eine der Fig. 5 entsprechende Darstellung, wobei das Leitelementgehäuse dem Lageraufnahmeteil zugeordnet ist, jedoch unter Fortlassung des Elektromotors und dessen Motorgehäuses;
- Fig. 7: eine weitere der Fig. 5 entsprechende Darstellung, wobei jedoch hier das Leitelementgehäuse fortgelassen ist;
- Fig. 8: eine vergrößerte Ausschnittsdarstellung des Überganges von einer leitschaufelartigen Ausformung des Lageraufnahmeteiles zu einem Strömungsleitelement des Leitelementgehäuses;
- Fig. 9: eine Schnittdarstellung der schaufelartigen Ausformung;
- Fig. 10: das Leitelementgehäuse in einer dritten Ausführungsform, die Unteransicht einer aufgeklappten Montagegestellung darstellend;
- Fig. 11: eine Seitenansicht des Leitelementgehäuses gemäß Fig. 10;
- Fig. 12: das Lageraufnahmeteil in einer Draufsicht, eine weitere Ausführungsform betreffend;
- Fig. 13: den Schnitt gemäß der Linie XIII-XIII in Fig. 12;
- Fig. 14: den Schnitt gemäß der Linie XIV-XIV in Fig. 12.

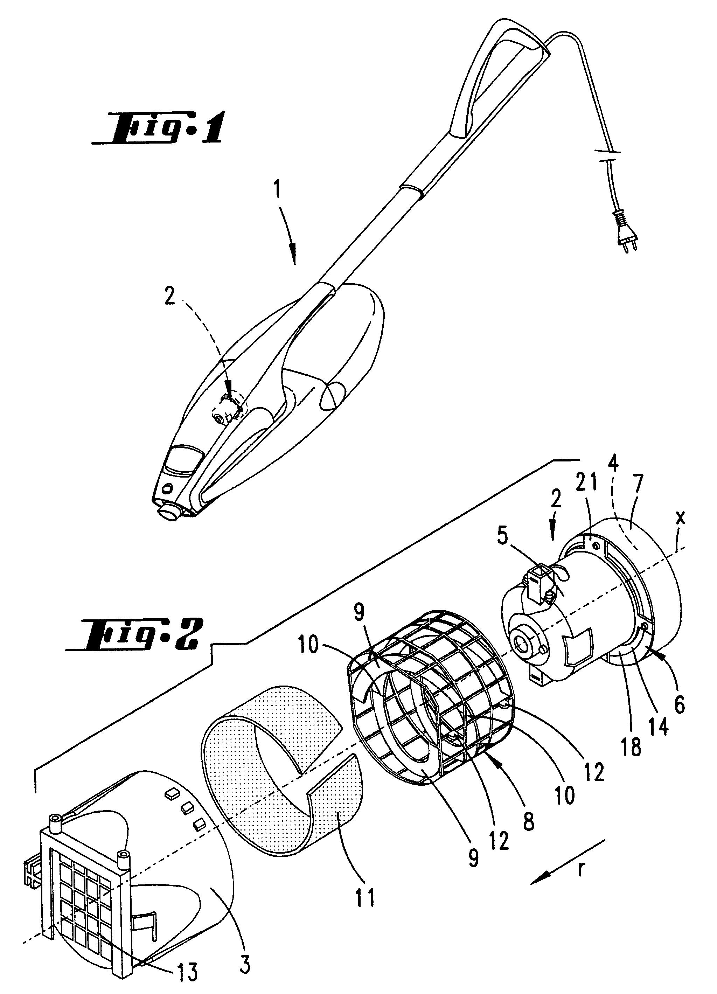

Dargestellt und beschrieben ist zunächst mit Bezug zu Fig. 1 ein Handstaubsauger 1, dessen Saugleistung von einer Motor-Gebläse-Einheit 2, welche einen schnellaufenden Elektromotor 2 aufweist, erbracht wird. Hier kommt ein schnellaufender, bevorzugt mit 33.000 Umdrehungen pro Minute laufender, in einem Motorgehäuse 5 sitzender Universalmotor zum Einsatz, der von dem aus einem Gebläseteil 4 austretenden Luft außen umströmt wird.

Der im einzelnen zeichnerisch nicht wiedergegebene Elektromotor setzt sich im wesentlichen aus dem Motorgehäuse 5, einem darin gehalterten, eine Motorwelle aufweisenden Rotor und einem Stator zusammen. Diese Einzelheiten sind im Detail nicht dargestellt.

Weiter ist ein Lageraufnahmeteil 6 vorgesehen, in welchem die Motorwelle gelagert ist. Das Lageraufnahmeteil 6 ist mit dem Motorgehäuse 5 schraubverbunden.
Auf der dem Motorgehäuse 5 abgewandten Seite des Lageraufnahmeteiles 6 ist ein an sich bekanntes Gebläserad auf der Motorwelle gelagert. Dieses Gebläserad ist durch ein weiteres Gehäuseteil 7, welches ebenfalls an dem Lageraufnahmeteil 6 angebunden ist, geschützt.

Wie weiter insbesondere aus Fig. 2 zu erkennen ist, weist das Motorgehäuse 5 Aufnahmen für Kohlebürsten auf. Diesbezüglich wird auf eine nicht vor veröffentlichte europäische Anmeldung 0 714 154 verwiesen.

Weiter zeigt Fig. 2 ein Leitelementgehäuse 8, welches gitterartig ausgebildet ist. Dieses Leitelementgehäuse 8 weist innenseitig bezüglich der gitterartigen Struktur hervorragende Strömungsleitelemente 9 auf. Diese sind in einem Querschnitt etwa rechteckig ausgebildet und sind mit den Gittern des Leitelementgehäuses 8 verbunden.

Die Strömungsleitelemente 9 erstrecken sich - von einem Ende des Leitelementgehäuses 8 ausgehend -, einem schraubenlinienförmigen Verlauf folgend bis an das entgegengesetzte Ende des Leitelementgehäuses 8. Es sind zwei Strömungsleitelemente 9 vorgesehen, welche bezogen auf die Längserstreckung des Leitelementgehäuses 8 zueinander um 180° versetzt sind. Demzufolge ergibt sich nach Art einer zweigängigen Schraubenlinie eine zweiwendelige, spiralförmige Ausbildung der Strömungsleitelemente 9.

In dem in Fig. 2 gezeigten ersten Ausführungsbeispiel eines Leitelementgehäuses 8 weisen die Strömungsleitelemente 9 einen, bezogen auf die Durchströmrichtung r, linksdrehenden Verlauf auf, wobei jedes Strömungsleitelement 9 im Verlaufe der Schraubenlinie eine Wende von ca. 360° durchfährt.

Die Innenkontur jedes Strömungsleitelementes 9, d. h. die Kontur der inneren Randkante, welche der Mittelachse x zugewandt ist, ist so gewählt, daß nach einem Überstülpen des Leitelementgehäuses 8 über das Motorgehäuse 5 sich die Strömungsleitelemente 9 nahezu dichtend auf der Mantelfläche des Motorgehäuses 5 abstützen.

Das Leitelementgehäuse 8 ist bevorzugt ein Kunststoffspritzteil, wobei dieses Gehäuse 8 und auch die Strömungsleitelemente 9 in einem Arbeitsgang gespritzt werden. Hierzu kann das gesamte Leitelementgehäuse 8 mitsamt den Strömungsleitelementen 9 zweiteilig ausgebildet sein mit einer Schnittebene, welche in zusammengebautem Zustand parallel zur Körpermittelachse x verläuft.

Es werden demnach zwei Kapselhälften gespritzt, wobei weiter bevorzugt wird, diese über ein Filmscharnier miteinander zu verbinden. Zum Überstülpen des Leitelementgehäuses 8 über das Motorgehäuse 5 werden die beiden Gehäusehälften um die Filmscharniere geklappt.
Eine Fixierung der beiden Gehäusehälften zueinander kann bspw. vermittels einer üblichen Clipsverbindung geschehen. In Fig. 2 sind Trennlinien 10 im Bereich der Strömungsleitelemente 9 zu erkennen. Die Filmscharniere und die Clipsverbindungen sind nicht dargestellt.

Weiter ist ein Schallschutzmaterial in Form einer Schaumstofffläche 11 vorgesehen, welche außenseitig das Leitelementgehäuse 8 umgibt. Zur Fixierung dieser Schaumstofffläche 11 besitzt das Leitelementgehäuse 8 außenseitig zahnartige Vorsprünge 12.

Die mit dem Leitelementgehäuse 8 und der Schaumstofffläche 11 versehene Motor-Gebläse-Einheit 2 wird im Einbauzustand von einem Motoraußengehäuse 3 umschlossen. Letzteres weist ausströmseitig, d. h. in Strömungsrichtung r gesehen, nachgeschaltet zu der Motor-Gebläse-Einheit 2, ein siebartiges, sich im wesentlichen quer zur Motorachse x erstreckendes Ausblasteil 13 auf.

Die um das Motorgehäuse 5 spiralförmig verlaufenden Strömungsleitelemente 9 begrenzen im wesentlichen boden- und deckenartig einen Luftströmungsweg in Form eines zweiwendeligen, spiralförmigen Strömungskanals. Die durch den an der Motorwelle angeflanschten Ventilator zugeführte Kühlluft durchtritt das Lageraufnahmeteil im Bereich von dort angeordneten Durchbrüchen 14 und wird in Richtung auf die Außenwandung des Motorgehäuses 5 geführt. Hier erfolgt eine weiche Ablenkung des Luftstromes entlang der schraubenlinienförmig ausgerichteten Strömungsleitelemente 9 zur Kühlung des Elektromotors. Die Kühlluft tritt gegen die untere Seite der Strömungsleitelemente 9 und wird der Spiralform folgend um das Motorgehäuse 5 geführt. Der Austritt der Kühlluft erfolgt am oberen Ende des Motorgehäuses 5 und von dort durch das Ausblasteil 13 in die Umgebung.

Die zwei spiralförmigen Strömungsleitelemente 9 überschneiden sich - in einer Projektion gesehen - über ca. einen halben Umfang, womit die Strömungsleitelemente 9 in diesem Überschneidungsbereich sowohl decken- als auch bodenartig fungieren.

Der so gebildete Strömungskanal ist durch die außenwandseitige Verkapselung mittels des Motoraußengehäuses 3 lediglich nach oben hin, d. h. in Richtung auf die Ausblasseite hin offen, so daß in optimaler Weise das Motorgehäuse 5 umströmt wird.

Ein weiterer, wesentlicher Vorteil in der erfindungsgemäßen Ausgestaltung liegt darin, daß der mit der Luft aus dem Gebläse 4 austretende Schall von den Strömungsleitelementböden/-decken derart reflektiert wird, daß er seitlich aus dem Leitelementgehäuse 8 austritt. Die hier über die Außenfläche des Leitelementgehäuses 8 gespannte Schaumstofffläche 11 absorbiert wirkungsvoll den austretenden Schall. Mit dem Effekt, daß der Verlauf des gebildeten Strömungskanals genau an der austretenden Luft orientiert ist und somit der Strömungskanal ohne nennenswerte Strömungsverluste passiert werden kann, ergibt sich durch die erfindungsgemäße Ausgestaltung eine kühlungs- und schallschutztechnisch verbesserte Lösung.

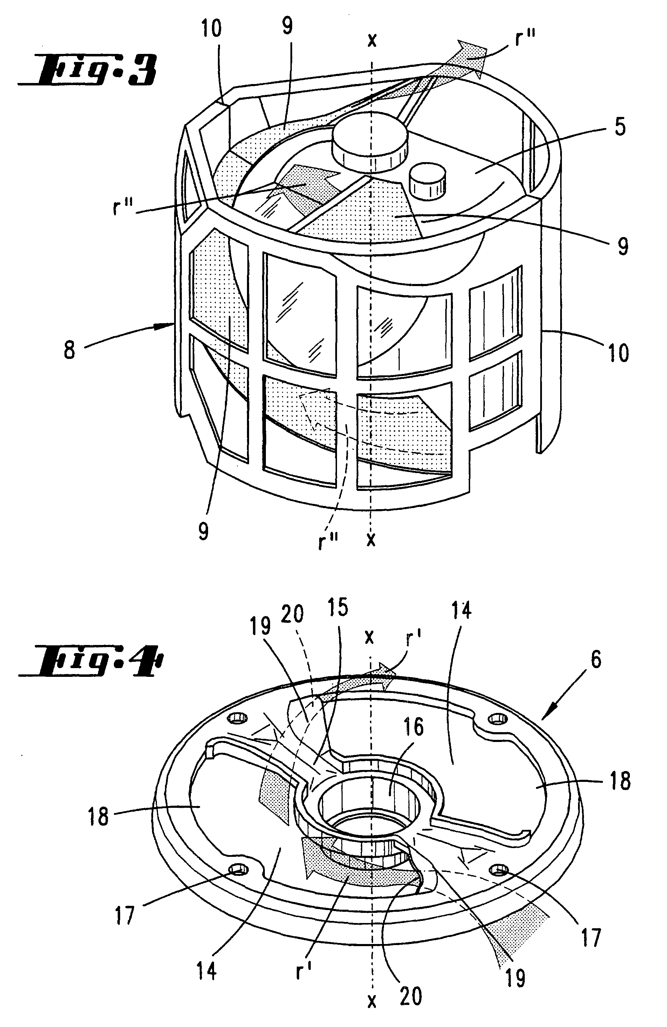

In den Fig. 3 bis 9 ist in einer zweiten Ausführungsform das Leitelementgehäuse 8 inklusive der Strömungsleitelemente 9 und detailliert das Lageraufnahmeteil 6 dargestellt.

Das in Fig. 4 dargestellte Lageraufnahmeteil 6 ist im Grundriß kreisscheibenartig ausgeformt und weist zwei durch ein Brückenteil 15 belassene Durchbrüche 14 auf. Mittig besitzt das Lageraufnahmeteil 6 eine in dem Brückenteil 15 angeordnete Lagerbohrung 16 zur Aufnahme eines Kugellagers der Motorwelle. Weiter sind oberseitig im Bereich des belassenen ringförmigen Randes Bohrungen 17 vorgesehen, durch welche Schrauben zur Befestigung des Lageraufnahmeteiles 6 an dem Motorgehäuse 5 geführt werden können. Hierzu weist das Motorgehäuse 5 entsprechend ausgebildete, radial ausgerichtete Befestigungsflansche 21 auf.

Die Durchbrüche 14 sind in ihrer Erstreckung so gewählt, daß diese einen Außenbereich 18 aufweisen, welcher in einer Projektion nach Zusammenbau der Motor-Gebläse-Einheit 2 teilweise außerhalb des Motorgehäuses 5 ausgebildet sind (vergl. Fig. 7). Dies bedeutet im einzelnen, daß ein durch die Durchbrüche 14 durchtretender Luftstrom durch die Außenbereiche 18 außen an dem Motorgehäuse 5 vorbeigeführt werden kann. Letzteres kann im übrigen in Richtung auf das Lageraufnahmeteil 6 geschlossen ausgebildet sein, so daß die Luft gezwungen ist, außenseitig vorbeizuströmen.

Weiter besitzt das Lageraufnahmeteil 6 im Bereich des Brückenteiles 15 beidseitig der Lageröffnung 16 jeweils eine leitschaufelartige Ausformung 19. Letztere sind punktsymmetrisch zur Motorwelle bzw. zur Achse x an zwei sich gegenüberliegenden Randbereichen des Brückenteiles 15 ausgebildet.

Konkret sind diese Leitschaufeln - in einer Draufsicht auf die dem Motorgehäuse 5 zugewandten Seite des Lageraufnahmeteiles 6 betrachtet - an den in Uhrzeigerrichtung weisenden Randkanten des Brückenteiles 15 angeordnet. Hierzu sind aus dem im wesentlichen einen flachen Querschnitt aufweisenden Brückenteil 15 nach oben hin, d. h. in Richtung auf das Motorgehäuse 5 weisende schaufelartige Schanzen aus dem Brückenteil 15 geformt.

Diese leitschaufelartigen Ausformungen 19 weisen weiter jeweils eine dem Außenbereich 18 der Durchbrüche 14 zugeordnete, rinnenartige Vertiefung 20 auf (siehe auch Fig. 9). Die, bezogen auf Fig. 4, von unten durch die Durchbrüche 14 durchströmende Luft wird - die Außenbereiche 18 durchtretend - vermittels der leitschaufelartigen Ausformungen 19 weich abgelenkt, dies - bezogen auf die zweite Ausführungsform des Leitelementgehäusesin Uhrzeigerrichtung. Das Brückenteil 15, welches üblicherweise der durchströmenden Luft entgegensteht, wirkt somit nicht mehr störend, sondern übernimmt die Aufgabe einer vorteilhaften, weichen Umlenkung der Kühlluft.

Das gesamte Lageraufnahmeteil 6 ist in Form eines Metallstabilisators ausgebildet.

Das in den Fig. 3, 5 und 6 dargestellte Leitelementgehäuse 8 der zweiten Ausführungsform weist entgegen der ersten Ausführungsform Strömungsleitelemente 9 auf, welche in Uhrzeigerrichtung angeordnet sind, dies bezogen auf die Durchströmrichtung r. Auch dieses Leitelementgehäuse 8 mitsamt den Strömungsleitelementen 9 ist zweigeteilt ausgebildet. Die Trennlinien sind mit den Bezugszeichen 10 versehen.

Die Leitelementbreite a, gemessen quer zur Strömungsrichtung, d. h. radial gemessen zwischen Motorgehäusewandung und Leitelementgehäuse 8, entspricht erfindungsgemäß dem 0,5 bis 0,7fachen der Breite b des Außenbereiches 18, gemessen in radialer Richtung zwischen Motorgehäusewandung und äußere Begrenzung des Durchbruches 14 des Lageraufnahmeteiles 6 (vergl. Figuren 5 und 7).

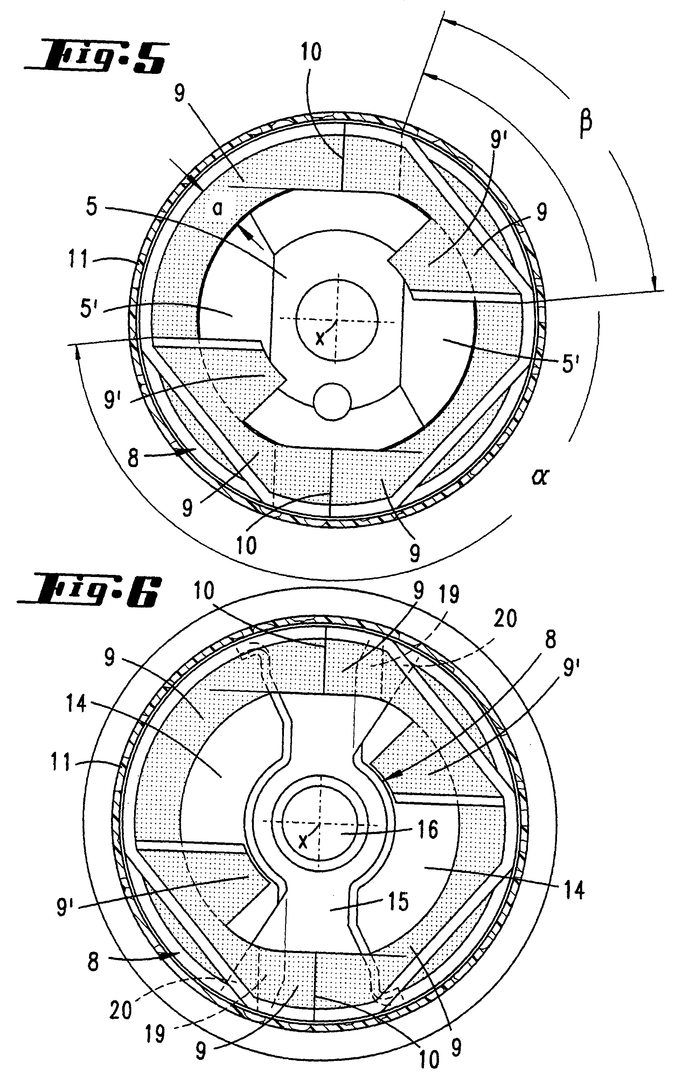

Diese Strömungsleitelemente 9 begrenzen auch hier im wesentlichen boden- und deckenartig einen Luftströmungsweg. Wie insbesondere aus Fig. 5 zu erkennen, ist jedes Strömungsleitelement 9 über mehr als einen halben Umfang ausgebildet, wobei bevorzugt wird, daß ein Umschlingungswinkel des spiralförmigen Strömungsleitelementes zwischen 200° bis 300° liegt. Konkret ist dies in dem gezeigten Ausführungsbeispiel so gelöst, daß jedes Strömungsleitelement 9 sich über einen Winkel Alpha von ca. 240° erstreckt. Wie weiter aus den Fig. 5 und 6 zu erkennen, sind die beiden Strömungsleitelemente 9 um ca. 180° um die Mittelachse x versetzt zueinander angeordnet. Hieraus ergibt sich ein Überlappungsbereich, welcher sich in dem gezeigten Ausführungsbeispiel über einen Winkel Beta von ca. 60° erstreckt.

Weiter ist zu erkennen, daß die Strömungsleitelemente 9 im Bereich ihrer in Ausblasrichtung weisenden Endbereiche 9' sich nach innen hin in Richtung auf die Mittelachse x erweitern, dies dadurch bedingt, daß das Motorgehäuse 5 in diesem Bereich Abflachungen 5' aufweist, und die Strömungsleitelemente 9 bevorzugt generell so ausgeformt sind, daß diese stets an der Außenwandung des Motorgehäuses 5 entlang verlaufend anliegen.

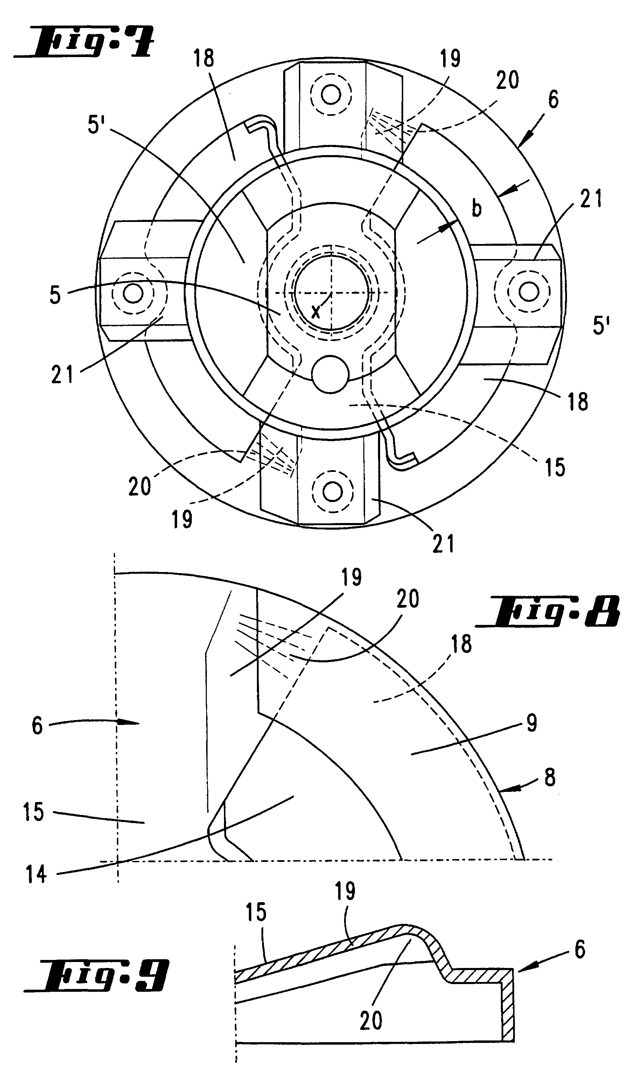

Hier erweist sich nunmehr die Ausbildung von leitschaufelartigen Ausformungen 19 an dem Lageraufnahmeteil 6 von Vorteil, da die Anordnung von Lageraufnahmeteil 6 zum Leitelementgehäuse 8 so gewählt ist, daß die rinnenartigen Vertiefungen 20 etwa mittig zu den Strömungsleitelementen 9, und zwar unterseitig, angeordnet sind (vergl. Fig. 8). Dies bedeutet, daß die durch die Vertiefungen 20 durch den Außenbereich 18 des Lageraufnahmeteiles 6 geleitete Luft (Pfeile r' in Fig. 4) mittig auf die unterseitige Fläche des jeweiligen Strömungsleitelementes 9 gelenkt wird, worauf hiernach die Luft in optimaler Weise sich im Bereich zwischen dem Motorgehäuse 5 und dem durch die Schaumstofffläche 11 begrenzten Wandung des Leitelementgehäuses 8 verteilen und spiralförmig in Richtung Auslaß bewegen kann (Pfeile r'' in Fig. 3).

Bedingt durch diese Ausgestaltung wird der mit der Luft aus dem Gebläse 4 austretende Schall von den Strömungsleitelementböden/-decken und von der Motorgehäusewandung derart reflektiert, daß er seitlich aus dem als Kunststoffkorb ausgebildeten Leitelementgehäuse 8 austritt. Die über die gesamte Außenfläche des Leitelementgehäuses 8 gespannte Schaumstofffläche 11 absorbiert wirkungsvoll den austretenden Schall.

Zur verlustarmen Strömung und Erhöhung der akustischen Wirksamkeit wird die Luft durch zwei Spiralen, die dicht am Motorgehäuse 5 anliegen, geführt. Die Spiralen beginnen um 180° versetzt an zwei der vier Befestigungsflanschen 21 des Motorgehäuses 5, die den ringförmigen Ausblasquerschnitt, gebildet durch die Durchbrüche 14, unterbrechen. Die Spiralen verlaufen stetig und führen die Luft zu der dem Gebläseteil 4 gegenüberliegenden Seite. Die Auslegung der Spiralen erfolgt in der Weise, daß der Strömungsquerschnitt zwischen den Spiralen im Bereich des zylindrischen Motorgehäuses 5 konstant ist. Der Umschlingungswinkel der Spiralen liegt, wie bereits erwähnt, zwischen 200° und 300°, so daß eine freie Durchstrahlung des Geräusches von der ringförmigen Gebläseausblasöffnung im Bereich der Durchbrüche 14 zur Motorkapselausblasöffnung vermieden wird. Auch in dem konisch verlaufenden Motorgehäusebereich werden die Spiralen eng an dem Motorgehäuse entlanggeführt, wobei die Breite a der Spirale deutlich vergrößert wird.

Der Spalt zwischen der Spirale bzw. dem Leitelementgehäuse 8 und dem Motoraußengehäuse 3 wird bevorzugt mit Schaumstoff zur Geräuschdämpfung ausgefüllt. Motorgehäuse 5, das Leitelementgehäuse 8 und das Motoraußengehäuse 3 sind insbesondere auch im konischen Bereich des Motorgehäuses 5 so abgestimmt, daß das Absorptionsmaterial aus einem Plattenmaterial konstanter Wanddicke im einfachen Zuschnitt erstellt werden kann.

Bedingt durch die spiralförmigen Strömungsleitelemente 9 wird zwar der Strömungsweg erhöht, gleichzeitig wird jedoch sowohl die Kühlstrecke der Luft entlang des Motorgehäuses 5 als auch die Absorptionsstrecke für das Geräusch erhöht. Zudem wird die Luftströmung, die naturgemäß beim Austritt aus dem Gebläseteil 4 stark verwirbelt ist, in den gebildeten Kanälen beruhigt, was zur Geräuschreduzierung beiträgt.

Bedingt durch die stetige Luftführung und die Vermeidung von plötzlichen Umlenkungen sind die Strömungsverluste niedrig. Durch die konische Gestaltung des Motorgehäuseendbereiches, welcher dem Gebläseteil 4 gegenüberliegt, wird der Austrittsquerschnitt aus dem Spiralraum vergrößert, was zu niedrigen Strömungsverlusten und niedrigen Geräuschen beiträgt.

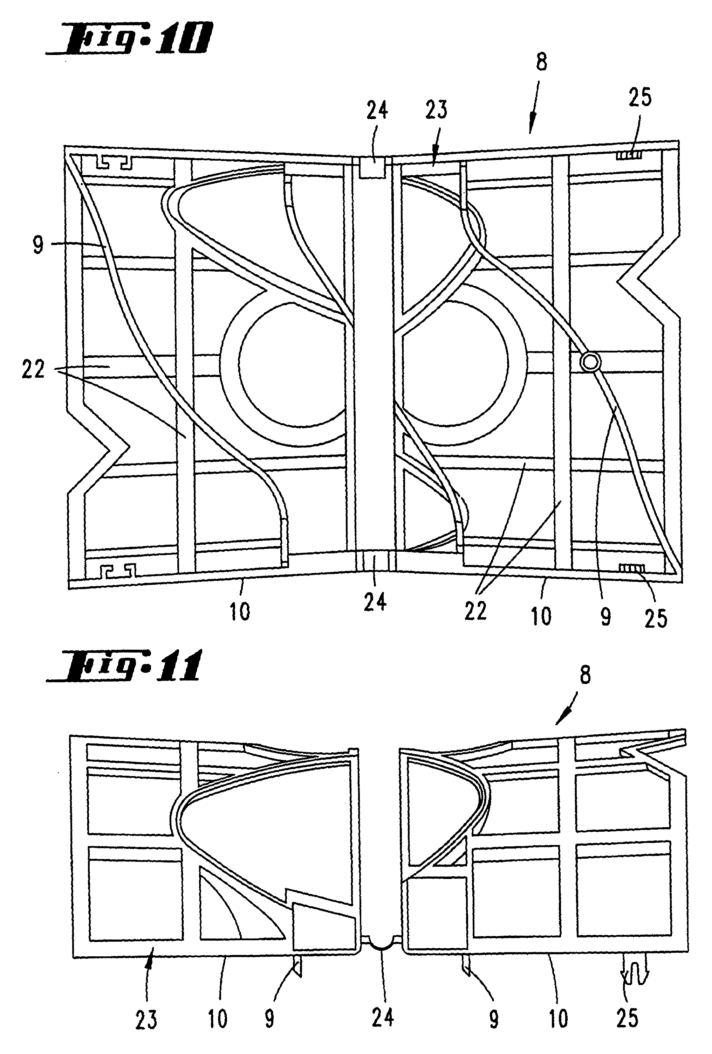

In den Fig. 10 und 11 ist das Leitelementgehäuse 8 in einer weiteren Ausführungsform dargestellt. Es ist zu erkennen, daß die Strömungsleitelemente 9 vermittels Zwischenstegen 22 gitterförmig miteinander verbunden sind. Diese Zwischenstege 22 stabilisieren einerseits die Strömungsleitelemente 9 und andererseits halten diese, in Einbausituation, den schallabsorbierenden Schaumstoff in Position. Auf diese Weise ergibt sich ein Spiralgitterkorb 23 mit zwei ineinander verlaufenden Spiralen.

Um eine einfache Handhabung bei der Montage zu erzielen, ist dieser Spiralgitterkorb 23 vorteilhaft in Motorachsrichtung getrennt und zur Ausblasseite hin aufgeklappt. Durch sogenannte Filmscharniere 24 bleiben die Korbhälften miteinander verbunden und erleichtern somit die Montage auf den Motor 2. Mit zusätzlichen Rastvorrichtungen 25 werden die Korbhälften untereinander und auf dem Motor 2 fixiert.

Zur weiteren Montageerleichterung können, wie bereits erwähnt, kleine zahnartige Vorsprünge außen an den Zwischenstegen und/oder Strömungsleitelementen 9 angebracht sein, an denen sich der Schaumstoff verhaken kann. So kann der Schaumstoff an dem mit dem Spiralkorb 23 versehenen Elektromotor 2 vormontiert und anschließend in das Motoraußengehäuse 3 eingeschoben werden.

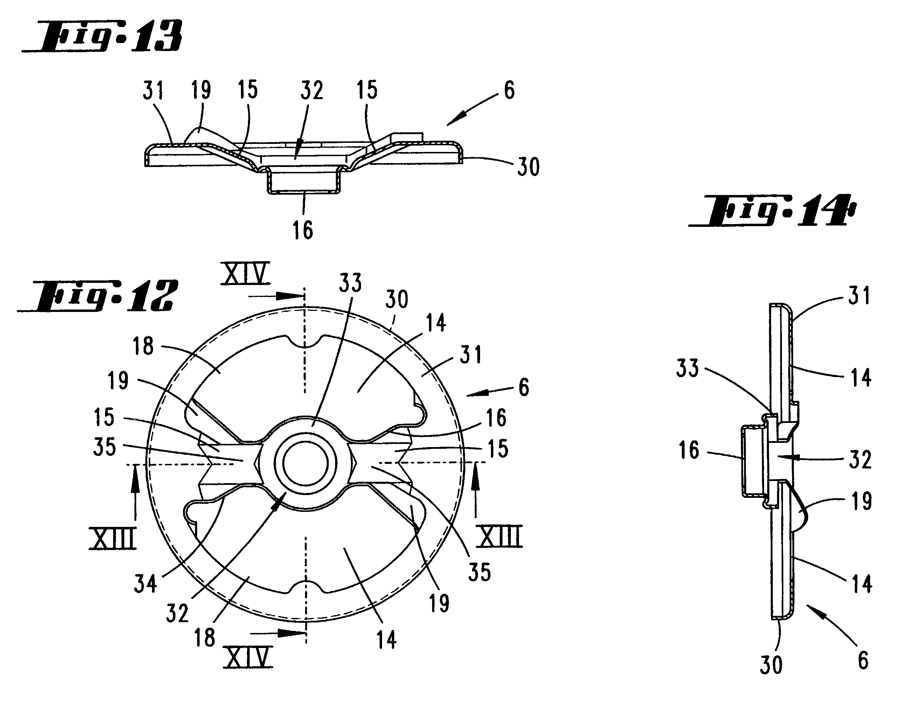

In den Fig. 12 bis 14 ist in einer weiteren Ausführungsform ein Lageraufnahmeteil 6 dargestellt, welches im wesentlichen aus einem zylindrischen Bereich 30, einem Ringbereich 31 und zwei Brückenteilen 15, die die Verbindung zwischen dem Ringbereich 31 und der Lagerstelle herstellen, gebildet ist. Der zylindrische Bereich 30 ist für die Aufnahme des Gehäuseteiles 7 vorgesehen und verstärkt gleichzeitig die für die präzise Befestigung vom Lageraufnahmeteil 6 und Motorgehäuse 5 wichtige Ringfläche 31.

Die Lagerstelle wird gebildet aus einer topfartigen Lageraufnahme 32 und einem anschließenden zweiten topfartigen Gebilde 33, daß zu den Brückenteilen 15 hin geöffnet ist. Die Brückenteile 15 sind versteift durch hochgestellte Wandungen 34 und einer Mittelsicke 35. Weiter sind die Brückenteile 15 asymmetrisch aufgebaut, derart, daß die strömungsabgewandte Seite eine ohrenförmige Gestalt zur Bildung einer leitschaufelartigen Ausformung 19 aufweist, die sowohl eine Versteifung des jeweiligen Brückenteiles 15 bewirkt als auch die Luftströmung vorteilhaft zirkulierend ausströmen läßt, so daß das Motorgehäuse 5 durch eine Drallströmung umspült wird.

## Patentansprüche

1. Schnellaufender Elektromotor, bspw. für Haushaltsgeräte, insbesondere für einen Staubsauger (1), mit einem eine Motorwelle aufweisenden Rotor und einem Stator, mit einem Lageraufnahmeteil (6), in welchem die Motorwelle gelagert ist, wobei an der Motorwelle ein Ventilator angeflanscht ist zur Kühlung des Motors und bspw. bei einem Staubsauger (1) zur Erbringung der Saugleistung, wobei weiter der Rotor und der Stator in einem Motorgehäuse (5) aufgenommen sind und die Kühlluft zumindest teilweise außerhalb des Motorgehäuses (5) entlangströmt, wobei der außerhalb des Motorgehäuses (5) entlangströmenden Kühlluft ein schraubenlinienförmiger Verlauf aufgeprägt ist, **dadurch gekennzeichnet, daß** die Kühlluft durch das Lageraufnahmeteil (6) im Bereich von dort angeordneten Durchbrüchen (14) tritt und in Richtung auf die Außenwandung des Motorgehäuses (5) geführt ist und daß ein außenseitig des Motorgehäuses (5) angeordnetes Strömungsleitelement (9) über mehr als einen halben Umfang des Motorgehäuses (5) ausgebildet ist.

2. Elektromotor nach einem oder mehreren der vorhergehenden Ansprüche, **dadurch gekennzeichnet, daß** die Strömungsleitelemente (9) in einem gesonderten Leitelementgehäuse (8) angeordnet sind.

3. Elektromotor nach einem oder mehreren der vorhergehenden Ansprüche, **dadurch gekennzeichnet, daß** das Leitelementgehäuse (8) gitterartig ausgebildet ist.

4. Elektromotor nach einem oder mehreren der vorhergehenden Ansprüche, **dadurch gekennzeichnet, daß** die Strömungsleitelemente (9) im wesentlichen boden- und deckenartig einen Luftströmungsweg begrenzen.

5. Elektromotor nach einem oder mehreren der vorhergehenden Ansprüche, **dadurch gekennzeichnet, daß** ein Strömungsleitelement (9) einen Umschlingungswinkel (Alpha) von 200° bis 300° aufweist.

6. Elektromotor nach einem oder mehreren der vorhergehenden Ansprüche, **dadurch gekennzeichnet, daß** das Motoraußengehäuse (3) ausströmseitig ein siebartiges, sich im wesentlichen quer zur Motorachse (x) erstreckendes Ausblasteil (13) aufweist.

7. Elektromotor nach einem oder mehreren der vorhergehenden Ansprüche, wobei das Motoraußengehäuse (3) ventilatorseitig ein Lageraufnahmeteil (6) aufweist und das Lageraufnahmeteil (6) mindestens ein, Durchbrüche (14) belassendes Brückenteil (15) aufweist, **dadurch gekennzeichnet, daß** das Lageraufnahmeteil (6) durchbruchseitig eine leitschaufelartige Ausformung (19) aufweist.

8. Elektromotor nach einem oder mehreren der vorhergehenden Ansprüche, **dadurch gekennzeichnet, daß** der Durchbruch (14) einen Außenbereich (18) aufweist, der in einer Projektion teilweise außerhalb des Motorgehäuses (5) ausgebildet ist.

9. Elektromotor nach einem oder mehreren der vorhergehenden Ansprüche, **dadurch gekennzeichnet, daß** die leitschaufelartige Ausformung (19) den Luftstrom zumindest teilweise in den Außenbereich (18) ablenkt.

10. Elektromotor nach einem oder mehreren der vorhergehenden Ansprüche, **dadurch gekennzeichnet, daß** die Strömungsleitelemente (9) in dem Leitelementgehäuse (8) innenseitig bezüglich der gitterartigen Struktur hervorragen.

11. Elektromotor nach einem oder mehreren der vorhergehenden Ansprüche, **dadurch gekennzeichnet, daß** das Leitelementgehäuse (8) außenseitig von einem Schallschutzmaterial umgeben ist.

12. Elektromotor nach einem oder mehreren der vorhergehenden Ansprüche, **dadurch gekennzeichnet, daß** die Strömungsleitelemente (9) nach Art einer zweigängigen Schraubenlinie ausgebildet sind.

13. Elektromotor nach einem oder mehreren der vorhergehenden Ansprüche, **dadurch gekennzeichnet, daß** das Leitelementgehäuse (8) gegebenenfalls einschließlich des Schallschluckmaterials von einem Motoraußengehäuse (3) umgeben ist.

14. Elektromotor nach einem oder mehreren der vorhergehenden Ansprüche, **dadurch gekennzeichnet, daß** die Breite (a) des Strömungsleitelementes (9) etwa dem 0,3 bis 1fachen, vorzugsweise dem 0,5 bis 0,7fachen der radialen Breite (b) des in einer Projektion außerhalb des Motorgehäuses (5) ausgebildeten Teilbereiches des Außenbereiches (18) entspricht.

15. Elektromotor nach einem der Ansprüche 7-14, **dadurch gekennzeichnet, dass** die leitschaufelartige Ausformung (19) im Wesentlichen eine Fortsetzung des Strömungselementes (9) darstellt.

16. Elektromotor nach einem der Ansprüche 7-15, **dadurch gekennzeichnet, dass** die leitschaufelartige Ausformung (19) eine dem Außenbereich zugeordnete, rinnenartige Vertiefung aufweist.

17. Elektromotor nach Anspruch 16, **dadurch gekennzeichnet, dass** die rinnenartige Vertiefung (20) etwa mittig zu dem Strömungsleitelement (9) angeordnet ist.

18. Elektromotor nach einem der Ansprüche 7-17, **dadurch gekennzeichnet, dass** die leitschaufelartige Ausformung (19) punktsymmetrisch zur Motorwelle an zwei gegenüberliegenden Randbereichen des Brückenteiles (15) ausgebildet ist.

## Claims

1. High-speed electric motor, for example for domestic appliances, especially for a vacuum cleaner (1), with a rotor fitted with a motor shaft and a stator, with a bearing receiving portion (6), in which the motor shaft is mounted, a fan being flanged onto the motor shaft to cool the motor and, in the case of a vacuum cleaner (1) for instance, to provide the suction power, and the rotor and stator being fitted in a motor housing (5) and at least part of the cooling air flowing along the outside of the motor housing (5), the cooling air that flows along the outside of the motor housing (5) being caused to flow in a helical path, **characterized in that** the cooling air passes through the bearing receiving portion (6) in the region of openings (14) provided there and is conducted in the direction of the outer wall of the motor housing (5), and **in that** a flow guiding element (9) disposed outside the motor housing (5) is formed over more than half the circumference of the motor housing (5).

2. Electric motor according to one or more or the preceding claims, **characterized in that** the flow guiding elements (9) are arranged in a separate guide element housing (8).

3. Electric motor according to one or more of the preceding claims, **characterized in that** the guide clement housing (8) is formed in a lattice-like manner.

4. Electric motor according to one or more of the preceding claims, **characterized in that** the flow guiding elements (9) act substantially like bottom and top elements to define an air flow path.

5. Electric motor according to one or more of the preceding claims, **characterized in that** a flow guiding element (9) has an angle of wrap (alpha) of from 200° to 300°.

6. Electric motor according to one or more of the preceding claims, **characterized in that** the outer motor housing (3) has on the outflow side a screen-like exhaust portion (13), extending substantially transversely in relation to the motor axis (x).

7. Electric motor according to one or more of the preceding claims, the outer motor housing (3) having on the fan side a bearing receiving portion (6) and the bearing receiving portion (6) having at least one bridge portion (15) leaving openings (14), **characterized in that** the bearing receiving portion (6) has on the openings side a guide-vane-like formation (19).

8. Electric motor according to one or more of the preceding claims, **characterized in that** the opening (14) has an outer region (18) which, in a projection, is formed partly outside the motor housing (5).

9. Electric motor according to one or more of the preceding claims, **characterized in that** the guide-vane-like formation (19) deflects the air stream at least partly into the outer region (18).

10. Electric motor according to one or more of the preceding claims, **characterized in that** the flow guiding elements (9) in the guide element housing (8) protrude on the inside with respect to the lattice-like structure.

11. Electric motor according to one or more of the preceding claims, **characterized in that** the guide element housing (8) is surrounded on the outside by a sound insulating material.

12. Electric motor according to one or more of the preceding claims, **characterized in that** the flow guiding elements (9) are formed in the manner of a two-start helix.

13. Electric motor according to one or more of the preceding claims, **characterized in that** the guide element housing (8) is surrounded by an outer motor housing (3), if appropriate including the sound absorbing material.

14. Electric motor according to one or more of the preceding claims, **characterized in that** the width (a) of the flow guiding elements (9) corresponds approximately to 0.3 to 1 times, preferably 0.5 to 0.7 times, the radial width (b) of the subregion of the outer region (18) formed in a projection outside the motor housing (5)

15. Electric motor according to one of Claims 7-14, **Characterized in that** the guide-vane-like formation (19) substantially represents a continuation of the flow element (9).

16. Electric motor according to one of Claims 7-15, **characterized in that** the guide-vane-like formation (19) has a channel-like depression associated with the outer region.

17. Electric motor according to Claim 16, **characterized in that** the channel-like depression (20) is arranged approximately centrally in relation to the flow guide element (9).

18. Electric motor according to one of Claims 7-17, **characterized in that** the guide-vane-like formation (19) is formed point-symmetrically in relation to the motor shaft at two opposite edge regions of the bridge portion (15).

## Revendications

1. Moteur électrique rapide, par exemple pour des appareils domestiques, en particulier pour un aspirateur à poussière (1) avec un rotor présentant un arbre de moteur et un stator, avec une partie support de palier (6) dans laquelle l'arbre de moteur est monté, un ventilateur étant monté sur l'arbre de moteur, pour assurer le refroidissement du moteur et, par exemple, dans le cas d'un aspirateur à poussière (1), pour apporter la puissance d'aspiration, le rotor et le stator étant en outre logés dans un carter de moteur (5) et l'air de refroidissement s'écoulant au moins partiellement à l'extérieur le long du carter de moteur (5), l'air de refroidissement s'écoulant le long et à l'extérieur du carter moteur (5) subissant unc trajectoire hélicoïdale, **caractérisé en ce que** l'air de refroidissement passe à travers la partie support de palier (6) dans la zone d'ajours (14) effectuée à cet endroit et est guidé dans la direction de la paroi extérieurc du carter de moteur (5), et **en ce qu'**un élément de guidage d'écoulement (9), disposé du côté extérieur du carter de moteur (5), est réalisé sur plus de la moitié de la périphérie du carter de moteur (5).

2. Moteur électrique selon l'une ou plusieurs des revendications précédentes, **caractérisé en ce que** les éléments de guidage d'écoulement (9) sont disposés dans un boîtier (8) séparé.

3. Moteur électrique selon l'une ou plusieurs des revendications précédentes, **caractérisé en ce que** le boîtier d'élément de guidage (8) est réalisé en grillage.

4. Moteur électrique selon l'une ou plusieurs des revendications précédentes, **caractérisé en ce que** les éléments de guidage d'écoulement (9) délimitent une voie d'écoulement d'air sensiblement sous forme d'un plancher et d'un plafond.

5. Moteur électrique selon l'une ou plusieurs des revendications précédentes, **caractérisé en ce qu'**un élément de guidage d'écoulement (9) présente un angle d'enroulement (alpha) de 200° à 300°.

6. Moteur électrique selon l'une ou plusieurs des revendications précédentes, **caractérisé en ce que** le boîtier extérieur de moteur (3) présente, du côté sortie de l'écoulement, une partie d'expulsion (13) du genre d'un tamis, s'étendant sensiblement transversalement à l'axe moteur (x).

7. Moteur électrique selon l'une ou plusieurs des revendications précédentes, le boîtier extérieur de moteur (3) qui présente, côté ventilateur, une partie support de palier (6) et la partie support de palier (6) présente au moins une partie formant un pont (15) recevant des ajours (14), **caractérisé en ce que** la partie support de palier (6) présente, à côté des ajours, une forme (19) du genre d'aubes directrices.

8. Moteur électrique selon l'une ou plusieurs des revendications précédentes, **caractérisé en ce que** l'ajour (14) présente une zone extéricure (18) réalisée en projection partiellement à l'extérieur du carter moteur (5).

9. Moteur électrique selon l'une ou plusieurs des revendications précédentes, **caractérisé en ce que** le profilage tridimensionnel (19) du genre d'aube directrice dévie le flux d'air au moins partiellement dans la zone extérieure (18).

10. Moteur électrique selon l'une ou plusieurs des revendications précédentes, **caractérisé en ce que** les éléments de guidage d'écoulement (9) ressortent dans le boitier d'élément de guidage (8) côté intérieur par rapport à la structure en grillage.

11. Moteur électrique selon l'une ou plusieurs des revendications précédentes, **caractérisé en ce que** le boîtier d'élément de guidage (8) est entouré côté extérieur par un matériau d'isolation acoustique.

12. Moteur électrique selon l'une ou plusieurs des revendications précédentes, **caractérisé en ce que** les éléments de guidage d'écoulement (9) sont réalisées à la façon d'une hélice à deux filets.

13. Moteur électrique selon l'une ou plusieurs des revendications précédentes, **caractérisé en ce que** le boîtier d'éléments de guidage (8) est entouré, le cas échéant y compris le matériau d'isolation acoustique, par un boîtier extérieur de moteur (3).

14. Moteur électrique selon l'une ou plusieurs des revendications précédentes, **caractérisé en ce que** la largeur (a) de l'élément de guidage d'écoulement (9) correspond à peu près à 0,3 à 1 fois, de préférence de 0,5 à 0,7 fois la largeur radiale (b) de la zone partielle, réalisée en projection, à l'extérieur du carter moteur (5) de la zone extérieure (18).

15. Moteur électrique selon l'une des revendications 7 à 14, **caractérisé en ce que** le profilage tridimensionnel (19) du genre d'aubes directrices représente sensiblement un prolongement de l'élément de guidage d'écoulement (9).

16. Moteur électrique selon l'une des revendications 7 à 15, **caractérisé en ce que** le profilage tridimensionnel (19) du genre d'aubes directrices présente une empreinte en forme d'anneau, associée à la zone extcrieure.

17. Moteur électrique selon l'une des revendications 16, **caractérisé en ce que** l'empreinte (20) en fonne d'anneau est agencée dans une position environ centrale par rapport à l'élément de guidage d'écoulement (9).

18. Moteur électrique selon l'une des revendications 7 à 17, **caractérisé en ce que** le profilage tridimensionnel (19) du genre d'aubes directrices est réalisé par symétrie ponctuelle par rapport à l'arbre de moteur, en deux zones de paroi opposées de la partie (15) formant un pont.
